(19) Europäisches Patentamt / European Patent Office / Office européen des brevets

(11) **EP 4 603 460 A1**

(12) **EUROPEAN PATENT APPLICATION**

(43) Date of publication:
**20.08.2025 Bulletin 2025/34**

(21) Application number: 25158928.9

(22) Date of filing: **19.02.2025**

(51) International Patent Classification (IPC):
**C01G 53/42** (2025.01)     **C01G 53/506** (2025.01)
**H01M 4/525** (2010.01)

(52) Cooperative Patent Classification (CPC):
**C01G 53/42; C01G 53/506; H01M 4/366;**
**H01M 4/525; H01M 10/0525;** C01P 2002/52;
C01P 2002/54; C01P 2002/60; C01P 2002/74;
C01P 2004/50; C01P 2006/40; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.02.2024 KR 20240023404**

(71) Applicant: SK On Co., Ltd.
**Seoul 03161 (KR)**

(72) Inventors:
• **LEE, Sang Han**
  **34124 Daejeon (KR)**
• **KOO, Chan Woo**
  **34124 Daejeon (KR)**
• **KIM, Eun Bi**
  **34124 Daejeon (KR)**
• **LEE, Sang Wook**
  **34124 Daejeon (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL FOR LITHIUM SECONDARY BATTERY AND LITHIUM SECONDARY BATTERY INCLUDING THE SAME**

(57)     A cathode active material for a lithium secondary battery according to embodiments of the present disclosure includes lithium-transition metal oxide particles which have a crystal grain size of 350 nm to 450 nm measured through X-ray diffraction (XRD) analysis and an XRD peak intensity ratio of 10% to 11%.

[FIG. 1]

**Description**

[BACKGROUND OF THE INVENTION]

1. Field of the Invention

The disclosure of the present application relates to a cathode active material for a lithium secondary battery and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

Recently, as subjects, to which the lithium secondary battery is applied, are expanded, longer life, high capacity and operational stability are required. For example, output characteristics and lifespan characteristics of the lithium secondary battery may be decreased according to the deformation of a cathode active material, and a side reaction between the cathode active material and an electrolyte of the lithium secondary battery.

[SUMMARY OF THE INVENTION]

According to an aspect of the present disclosure, it is an object to provide a cathode active material for a lithium secondary battery having improved output characteristics and high-temperature lifespan characteristics.

According to another aspect of the present disclosure, it is an object to provide a lithium secondary battery which includes the cathode active material having improved output characteristics and high-temperature lifespan characteristics.

To achieve the above objects, according to an aspect of the present disclosure, there is provided a cathode active material for a lithium secondary battery including: lithium-transition metal oxide particles which have a crystal grain size of 350 nm to 450 nm measured by X-ray diffraction (XRD) analysis, and an XRD peak intensity ratio of 10% to 11% defined by Equation 1 below:

[Equation 1]

$$\text{XRD peak intensity ratio (\%)} = 100 \times I(110)/\{I(110) + I(003)\}$$

In Equation 1, I(110) is a maximum height of a peak of a (110) plane of the lithium-transition metal oxide particles by the XRD analysis, and I(003) is a maximum height of a peak of a (003) plane by the XRD analysis.

In some embodiments, the crystal grain size may be measured through Equation 2 below:

[Equation 2]

$$L = \frac{0.9\lambda}{\beta cos\theta}$$

In Equation 2, L is the crystal grain size(nm), $\lambda$ is an X-ray wavelength(nm), $\beta$ is a full width at half maximum of the peak of the (003) plane(rad), and $\theta$ may be a diffraction angle(rad).

In some embodiments, the XRD peak intensity ratio may be 10.2% to 10.8%.

In some embodiments, the crystal grain size may be 400 nm to 450 nm.

In some embodiments, the crystal grain size may be 407 nm to 440 nm.

In some embodiments, the lithium-transition metal oxide particles may include nickel, and a ratio of a total number of moles of nickel in the lithium-transition metal oxide particles to a total number of moles of metals except for lithium in the lithium-transition metal oxide particles may be 0.9 or more.

In some embodiments, the ratio of the total number of moles of nickel in the lithium-transition metal oxide particles to the total number of moles of metals except for lithium in the lithium-transition metal oxide particles may be 0.94 or more.

In some embodiments, the lithium-transition metal oxide particles may have a single particle form.

In some embodiments, the lithium-transition metal oxide particles may include nickel, cobalt and manganese.

In some embodiments, the lithium-transition metal oxide particles may include a coating element or a doping element, and the coating element or the doping element may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

According to another aspect of the present disclosure, there is provided a lithium secondary battery including: a cathode which includes the above-described cathode active material for a lithium secondary battery; and an anode disposed to face the cathode.

According to one of more embodiments of the present disclosure, the output characteristics of the lithium-transition metal oxide particles may be enhanced, as well as crack occurrence may be suppressed, thereby improving the lifespan characteristics.

According to one or more embodiments of the present disclosure, the occurrence of a side reaction between the cathode active material and the electrolyte may be suppressed, and the high-temperature lifespan characteristics and output characteristics may be improved.

The cathode active material for a lithium secondary battery and the lithium secondary battery including the same of the present disclosure may be widely applied to green technology fields such as an electric vehicle, and a battery charging station, as well as other solar power generation and wind power generation using the batteries. In addition, the cathode active material for a lithium secondary battery and the lithium secondary battery including the same of the present disclosure may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

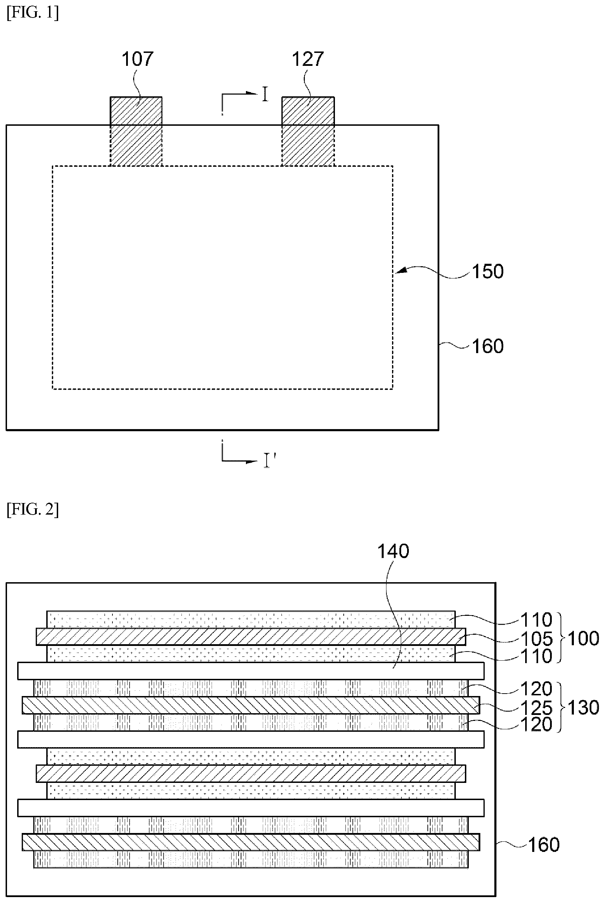

FIGS. 1 and 2 are a schematic plan view and a cross-sectional view illustrating a lithium secondary battery according to exemplary embodiments, respectively.

[DETAILED DESCRIPTION OF THE INVENTION]

Embodiments according to the disclosure of the present application provide a cathode active material for a lithium secondary battery (hereinafter, may be abbreviated as a "cathode active material"). In addition, a method for manufacturing the cathode active material and a lithium secondary battery (hereinafter, may be abbreviated as a "secondary battery") including the cathode active material are provided.

Hereinafter, the embodiments of the present disclosure will be described in detail. However, these embodiments are merely an example, and the present disclosure is not limited to the specific embodiments described as the example.

In the present invention, the cathode active material may include lithium (Li)-transition metal oxide particles. The lithium-transition metal oxide particles may further include at least one of cobalt (Co), manganese (Mn) and aluminum (Al). For example, the cathode active material may include a plurality of the lithium-transition metal oxide particles.

In some embodiments, the cathode active material or the lithium-transition metal oxide particles may include a layered structure or a crystal structure represented by Formula 1 below.

$$[\text{Formula 1}] \qquad Li_xNi_aM_bO_{2+z}$$

In Formula 1, x, a, b and z may be in a range of $0.9 \leq x \leq 1.2$, $0.6 \leq a \leq 0.99$, $0.01 \leq b \leq 0.4$, $-0.5 \leq z \leq 0.1$, respectively. As described above, M may include Co, Mn and/or Al.

The chemical structure represented by Formula 1 indicates a bonding relationship between elements included in the layered structure or crystal structure of the lithium-transition metal oxide particles, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In preferred embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also act as an auxiliary active element which contributes to the capacity/output activity of the cathode active material together with Co or Mn like Al.

For example, the cathode active material or the lithium-transition metal oxide particles may include a layered structure or crystal structure represented by Formula 1-1 below.

[Formula 1-1]    $Li_xNi_aM1_{b1}M2_{62}O_{2+z}$

In Formula 1-1, M1 may include Co, Mn and/or Al. M2 may include the above-described auxiliary elements. In Formula 1-1, x, a, b1, b2 and z may be in a range of $0.9 \leq x \leq 1.2$, $0.6 \leq a \leq 0.99$, $0.01 \leq b1+b2 \leq 0.4$, $-0.5 \leq z \leq 0.1$, respectively.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-transition metal oxide particles, or may also penetrate through the surface of the lithium-transition metal oxide particles to be included in the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and life-span stability of the cathode or the secondary battery may be relatively decreased, and a side reaction with the electrolyte may also be increased. However, according to the present invention, the life-span stability and capacity retention characteristics may be improved through Mn while maintaining electrical conductivity by including Co.

The content of Ni (e.g., a mole fraction of nickel based on the total number of moles of nickel, cobalt and manganese) in the NCM-based lithium oxide may be 0.5 or more, 0.6 or more, 0.7 or more, 0.8 or more, 0.9 or more, or 0.95 or more. In some embodiments, the content of Ni may be 0.8 to 0.98, 0.82 to 0.98, 0.83 to 0.98, 0.84 to 0.98, 0.85 to 0.98, 0.88 to 0.98, or 0.9 to 0.98.

In some embodiments, a ratio of the total number of moles of nickel in the lithium-transition metal oxide particles to the total number of moles of metals except for lithium in the lithium-transition metal oxide particles may be 0.9 or more, and in preferred embodiment, 0.94 or more. Within the above range, the output characteristics and capacity characteristics may be improved.

In the present invention, an X-ray diffraction (XRD) peak intensity ratio of the lithium-transition metal oxide particles defined by Equation 1 below may be 10% to 11%, and in some embodiments, 10.2% to 10.8%.

[Equation 1]

$$\text{XRD peak intensity ratio (\%)} = 100 \times I(110)/\{I(110) + I(003)\}$$

In Equation 1, I(110) is a maximum height of a peak of a (110) plane of the lithium-transition metal oxide particles by an XRD analysis, and I(003) is a maximum height of a peak of a (003) plane by the XRD analysis.

For example, the XRD analysis may be performed by using Cu-K$\alpha$ rays as a light source for the dried powder of the lithium-transition metal oxide particles in a diffraction angle (2$\theta$) range of 10° to 120° at a scan rate of 0.0065°/step.

Within the above XRD peak intensity ratio range, ion propagation/diffusion lengths in the (110) plane direction through which lithium ions are diffused may be controlled, and an aspect ratio between the (110) plane and the (003) plane intersecting each other may be controlled. Accordingly, the output characteristics of the lithium-transition metal oxide particles may be enhanced, as well as crack occurrence may be suppressed, thereby improving the lifespan characteristics.

In the present invention, the lithium-transition metal oxide particles may have a crystal grain size measured through XRD analysis of 350 nm to 450 nm, and in some embodiments, 400 nm to 450 nm or 407 nm to 440 nm. Within the above range, a mechanical strength of the particles may be improved while maintaining or improving the output characteristics. Accordingly, cracks in the particles and a side reaction with the electrolyte according to a high-Ni composition (for example, a ratio of the number of moles of nickel to the total number of moles of metals except for lithium in the lithium-transition metal oxide particles is 0.9 or more) may be suppressed, and both the high-temperature lifespan characteristics and the output characteristics may be improved.

In some embodiments, the crystal grain size may represent a crystal grain size in the (003) plane direction of the lithium-transition metal oxide particles.

In some embodiments, the crystal grain size may be calculated through the Scherrer equation (Equation 2 below) using a full width at half maximum (FWHM) obtained through the XRD analysis.

[Equation 2]

$$L = \frac{0.9\lambda}{\beta cos\theta}$$

In Equation 2, L is the crystal grain size(nm), $\lambda$ is an X-ray wavelength(nm), $\beta$ is a full width at half maximum of the peak of the (003) plane(rad), and $\theta$ is a diffraction angle(rad).

In some embodiments, $\beta$ in Equation 2 above may use the full width at half maximum corrected for a value derived from equipment. In preferred embodiment, Si may be used as a standard material for reflecting the equipment-derived value. In this case, by plotting full width at half maximum profiles in a full range of $2\theta$ of Si, the equipment-derived full width at half maximum may be represented as a function of $2\theta$. Thereafter, a value corrected by subtracting the equipment-derived full width at half maximum value in the corresponding $2\theta$ obtained from the above function may be used as $\beta$.

For example, the lithium-transition metal oxide particles may be prepared by mixing and calcining a transition metal precursor (e.g., Ni-Co-Mn hydroxide) and a lithium precursor (e.g., lithium hydroxide or lithium carbonate).

For example, as the calcination temperature is increased, the crystal grain size may be increased. Accordingly, the crystal grain size may be controlled by adjusting the calcination temperature.

For example, an increase rate of the crystal grain size in the (003) plane direction according to the increase of the calcination temperature may be greater than an increase rate of the crystal grain size in the (110) plane direction. Accordingly, if the calcination temperature is increased, the XRD peak intensity ratio may be decreased and the crystal grain size may be increased. Therefore, in order to control the XRD peak intensity ratio in a range of 10% to 11% while controlling the crystal grain size in a range of 400 nm to 450 nm, comprehensive and detailed control of a plurality of process conditions other than the calcination temperature may be required.

For example, the XRD peak intensity ratio and the crystal grain size may be controlled together by adjusting the reaction time, reaction temperature, calcination time, and/or calcination temperature of the transition metal precursor and the lithium precursor.

In some embodiments, the lithium-transition metal oxide particles may have a single particle form. Accordingly, mechanical stability of the lithium-transition metal oxide particles may be improved thus to suppress cracks, and a side reaction with the electrolyte may be reduced thus to improve the high-temperature lifespan characteristics. The crystal grain size, the XRD peak intensity ratio, and/or the nickel molar ratio may be controlled together, thereby alleviating or supplementing a decrease in output characteristics due to the use of single particles. Accordingly, the high-temperature lifespan characteristics and output characteristics may be improved together.

In preferred embodiment, the lithium-transition metal oxide particles may have a substantially single particle form.

The term "single particle form" as used herein is used to, for example, exclude secondary particles formed by aggregating a plurality of primary particles. For example, in the lithium-transition metal oxide particles, a secondary particle structure in which (e.g., greater than 10, 20 or more, 30 or more, 40 or more, 50 or more, etc.) of primary particles are assembled or agglomerated may be excluded.

The term "single particle form" as used herein does not exclude a form in which, for example, monolithic particles in a range of 2 to 10 are simply come into contact or adjacent to each other.

For example, the lithium-transition metal oxide particles may have a granular or spherical single particle form.

FIGS. 1 and 2 are a schematic plan view and a cross-sectional view illustrating a lithium secondary battery according to the present invention, respectively. For example, FIG. 2 is a cross-sectional view taken on line I-I' of FIG. 1 in a thickness direction of the lithium secondary battery.

Referring to FIGS. 1 and 2, the lithium secondary battery may include a cathode 100 including the above-described cathode active material and an anode 130 disposed to face the cathode 100.

The cathode 100 may include a cathode active material layer 110 formed by applying a cathode active material to at least one surface of a cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 to 50 $\mu$m.

The cathode active material layer 110 may include the above-described cathode active material.

The cathode active material may include a plurality of the lithium-transition metal oxide particles. For example, a total content of the lithium-transition metal oxide particles based on a total weight of the cathode active material may be 50 wt% or more. In some embodiments, the total content of the lithium-transition metal oxide particles based on the total weight of the cathode active material may be 60 wt% or more, 70 wt% or more, 80 wt% or more, or 90 wt% or more.

In preferred embodiment, the cathode active material may be substantially composed of the lithium-transition metal oxide particles.

The cathode active material may be mixed in a solvent to prepare a cathode slurry. The cathode slurry may be applied to at least one surface of the cathode current collector 105, followed by drying and pressing the same to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener but is no limited thereto.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In preferred embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, vapor-grown carbon fibers (VGCFs), carbon nanotubes (CNTs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In preferred embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 $\mu$m to 50 $\mu$m.

The anode active material layer 120 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), mesophase pitch-based carbon fiber (MPCF) but is no limited thereto.

The crystalline carbon may include graphite-based carbon such as natural graphite, artificial graphite, graphite cokes, graphite MCMB, graphite MPCF but is no limited thereto.

The lithium metal may include pure lithium metal and/or lithium metal having a protective layer formed thereon for suppressing dendrite growth and the like. In preferred embodiment, a lithium metal-containing layer deposited or applied to the anode current collector 125 may also be used as the anode active material layer 120. In preferred embodiment, a lithium thin film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiO_x(0<x<2)$, metal-doped $SiO_x(0<x<2)$, a silicon-carbon composite, etc.

The metal may include lithium and/or magnesium, and the metal-doped $SiO_x(0<x<2)$ may include a metal silicate.

The anode active material may be mixed in a solvent to prepare an anode slurry. The anode slurry may be applied/deposited to the anode current collector 125, followed by drying and pressing the same to prepare the anode active material layer 120. The coating may include a method such as gravure coating, slot die coating, simultaneous multilayer die coating, imprinting, doctor blade coating, dip coating, bar coating or casting, etc. The anode active material layer 120 may further include a binder, and optionally further include a conductive material, a thickener but is no limited thereto.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when manufacturing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In the present invention, a separation membrane 140 may be interposed between the cathode 100 and the anode 130. The separation membrane 140 may be configured to prevent an electrical short-circuit between the cathode 100 and the anode 130, and to allow a flow of ions to occur. For example, the separation membrane may have a thickness of 10 $\mu$m to 20 $\mu$m.

For example, the separation membrane 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to the present invention, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, etc. of the separation membrane 140.

The electrode assembly 150 may be housed in a case 160 together with the electrolyte to define a lithium secondary battery. According to the present invention, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may also be used instead of the above-described non-aqueous electrolyte. In this case, the lithium secondary battery may be manufactured in the form of an all-solid-state battery. In addition, a solid electrolyte layer may also be disposed between the cathode 100 and the anode 130 instead of the above-described separation membrane 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In preferred embodiment, the solid electrolyte may also include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIGS. 1 and 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

## Example 1

### (1) Preparation of lithium-transition metal oxide particles

$NiSO_4$, $CoSO_4$ and $MnSO_4$ were input and mixed in a molar ratio of 94:5:1 in distilled water from which dissolved oxygen was removed by bubbling with $N_2$ for 24 hours to prepare a mixed solution. The mixed solution was input into a reactor at 50 °C, and a co-precipitation was performed for 72 hours using NaOH and $NH_3 \cdot H_2O$ as a precipitant and a chelating agent, respectively, to obtain $Ni_{0.94}Co_{0.05}Mn_{0.01}(OH)_2$ as a transition metal precursor. The transition metal precursor was dried at 100 °C for 12 hours, and then again dried at 120 °C for 10 hours.

Lithium hydroxide and the transition metal precursor were added to a dry high-speed mixer in a ratio of 1.03:1, and uniformly mixed for 20 minutes. The mixture was put into a calcination furnace, and heated to 850 °C at a heating rate of 2 °C/min, then calcined at 850 °C for 12 hours. Oxygen was continuously passed at a flow rate of 10 L/min during the heating and calcination. After completion of the calcination, the mixture was naturally cooled to room temperature, followed by pulverization and classification to prepare lithium-transition metal oxide particles ($LiNi_{0.94}Co_{0.05}Mn_{0.01}O_2$) having a single particle form.

### (2) Manufacture of lithium secondary battery

A lithium secondary battery was manufactured using the lithium-transition metal oxide particles as a cathode active material.

Specifically, the cathode active material, Denka Black and CNT as conductive materials, and PVDF as a binder were mixed in a mass ratio of 97.7:0.5:0.5:1.3 to prepare a cathode slurry. The prepared cathode slurry was applied to an aluminum current collector, followed by drying and pressing the same to prepare a cathode.

An anode slurry, which includes 93 wt% of natural graphite as an anode active material, 5 wt% of flake type graphite (KS6) as a conductive material, 1 wt% of styrene-butadiene rubber (SBR) as a binder, and 1 wt% of carboxymethyl cellulose (CMC) as a thickener, was prepared. The anode slurry was applied to a copper substrate, followed by drying and pressing the same to prepare an anode.

Fourteen cathodes and fifteen anodes were respectively notched in a predetermined size and stacked, then an electrode cell was fabricated by interposing a separator (polyethylene, thickness 25 $\mu$m) between the cathode and anode. Thereafter, tap parts of the cathode and the anode were welded, respectively. A combination of the welded cathode/-separator/anode was put into a pouch, followed by sealing three sides of the pouch except for one side into which an electrolyte is injected ("electrolyte injection side"). At this time, a portion having the electrode tab was included in the sealing part. After injecting the electrolytic through the electrolyte injection side, the remaining electrolyte injection side was also sealed, followed by impregnation for 12 hours or more to manufacture a lithium secondary battery.

The electrolyte used herein was prepared by adding 1 wt% of vinylene carbonate (VC) and 0.5 wt% of 1,3-propene sultone (PRS) based on the total weight of the solution to 1M $LiPF_6$ solution prepared using a mixed solvent of EC/EMC (25/75; volume ratio).

Pre-charging was performed on the lithium secondary battery at a current (5 A) corresponding to 0.25C for 36 minutes. After 1 hour, degassing was performed, and aging was conducted for 24 hours or more, then formation charging/discharging was performed (charging condition: CC-CV 0.2C 4.2 V 0.05C CUT-OFF, discharging condition: CC 0.2C 2.5 V CUT-OFF).

## Example 2

A cathode active material and a lithium secondary battery were manufactured according to the same procedures as described in Example 1, except that the co-precipitation temperature and the calcination temperature were changed to 70 °C and 840 °C, respectively.

## Example 3

A cathode active material and a lithium secondary battery were manufactured according to the same procedures as described in Example 1, except that the precipitation reaction time and the calcination temperature were changed to 36 hours and 900 °C, respectively.

## Example 4

A cathode active material and a lithium secondary battery were manufactured according to the same procedures as described in Example 1, except that the co-precipitation temperature and the co-precipitation time were changed to 60 °C and 36 hours, respectively, as well as the calcination temperature and the calcination time were changed to 900 °C and 16 hours, respectively.

## Example 5

$NiSO_4$, $CoSO_4$ and $MnSO_4$ were input and mixed in a molar ratio of 94:3:3 in distilled water from which dissolved oxygen was removed by bubbling with $N_2$ for 24 hours to prepare a mixed solution. The mixed solution was input into a reactor at 50 °C, and a co-precipitation was performed for 48 hours using NaOH and $NH_3 \cdot H_2O$ as a precipitant and a chelating agent, respectively, to obtain $Ni_{0.94}Co_{0.03}Mn_{0.03}(OH)_2$ as a transition metal precursor. The obtained precursor was dried at 80 °C for 12 hours and then again dried at 110 °C for 12 hours.

Lithium hydroxide and the transition metal precursor were added to a dry high-speed mixer in a ratio of 1.01:1, and uniformly mixed for 5 minutes. The mixture was put into a calcination furnace, and heated to 830 °C to 850 °C at a heating rate of 2 °C/min, then maintained at 830 °C to 850 °C for 10 hours. Oxygen was continuously passed at a flow rate of 20 mL/min during the heating and calcination. After completion of the calcination, the mixture was naturally cooled to room temperature, followed by pulverization and classification to obtain lithium-transition metal oxide particles in the form of secondary particles having a composition of $LiNi_{0.94}Co_{0.03}Mn_{0.03}O_2$.

A lithium secondary battery was manufactured according to the same procedures as described in Example 1, except that the lithium-transition metal oxide particles were used as the cathode active material.

## Example 6

A cathode active material and a lithium secondary battery were manufactured according to the same procedures as described in Example 3, except that $NiSO_4$, $CoSO_4$ and $MnSO_4$ were input and mixed in a molar ratio of 88:6:6 in distilled water to prepare a mixed solution.

## Example 7

A cathode active material and a lithium secondary battery were manufactured according to the same procedures as described in Example 1, except that the co-precipitation temperature and the calcination temperature were changed to 40 °C and 900 °C, respectively.

## Comparative Example 1

A cathode active material and a lithium secondary battery were manufactured according to the same procedures as described in Example 1, except that the calcination temperature and the calcination time were changed to 800 °C and 8 hours, respectively.

## Comparative Example 2

A cathode active material and a lithium secondary battery were manufactured according to the same procedures as described in Example 1, except that the co-precipitation temperature and the co-precipitationtime were changed to 40 °C and 36 hours, respectively, as well as the calcination temperature and the calcination time were changed to 800 °C and 8 hours, respectively.

### Comparative Example 3

A cathode active material and a lithium secondary battery were manufactured according to the same procedures as described in Example 6, except that the calcination temperature and the calcination time were changed to 950 °C and 24 hours, respectively.

### Comparative Example 4

A cathode active material and a lithium secondary battery were manufactured according to the same procedures as described in Example 1, except that the calcination temperature and the calcination time were changed to 950 °C and 24 hours, respectively

## Experimental Example

(1) XRD analysis

1) Measurement of crystal grain size

The lithium-transition metal oxide particles of the above-described examples and comparative examples were subjected to XRD analysis according to the conditions listed in Table 1, and analysis results were substituted into Equation 2 to measure crystal grain sizes.

2) Measurement of XRD peak intensity ratio

The lithium-transition metal oxide particles of the above-described examples and comparative examples were subjected to XRD analysis as follows:

Sample preparation: Pour a volume of powder (1ml to 1.5ml) that can fill 2 times to 3 times the cylindrical hole (0.47ml) with a depth of 2.34mm and a diameter of 16mm in the SUS sample holder. Press down from top to bottom with hand pressure using a flat slide glass, then scrape off any excess powder that fills above the height of the cylindrical hole. XRD measurement: performed according to the conditions listed in Table 1, and analysis results were substituted into Equation 1 to measure XRD peak intensity ratios.

[TABLE 1]

| XRD (X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 to 120° |
| Scan Step Size | 0.0065° |
| Divergence slit | 1/4° |
| Antiscatter slit | 1/2° |

(2) Measurement of room-temperature resistance (DCIR)

The lithium secondary batteries of the above-described examples and comparative examples were charged (CC-CV 0.5C, SOC 100%) and discharged (CC 0.5C, SOC 0%) twice at 25 °C, then again charged (CC-CV 0.5C, SOC 100%) under CC-CV 0.5C conditions, and discharged (CC 0.5C, SOC 50%) to SOC 50%. Thereafter, the lithium secondary batteries were left for 30 minutes, and then voltages (first voltages) were measured.

Voltages (second voltages) at the moment when 10 seconds had passed while discharging (CC 1C) the lithium secondary batteries were measured. Room-temperature resistances were measured from a difference between the first voltage and the second voltage, respectively.

As measuring equipment, WONIK PNE's charging and discharging equipment was used.

(3) Evaluation of high-temperature capacity retention rate (45 °C, 500th cycle)

The lithium secondary batteries of the above-described examples and comparative examples were placed in a chamber at 45 °C, and charging (CC-CV 0.1C 4.2 V 0.05C CUT-OFF) and discharging (CC 0.1C 2.7 V CUT-OFF) were repeated 500 times, respectively. The discharge capacity at 500th cycle was divided by the discharge capacity at the 1st cycle and multiplied by 100 to evaluate the high-temperature capacity retention rate, respectively.

(4) High-temperature resistance increase rate (45 °C)

The lithium secondary batteries of the above-described examples and comparative examples were placed in a chamber at 45 °C, and charging (CC-CV 0.1C 4.2 V 0.05C CUT-OFF) and discharging (CC 0.1C 2.7 V CUT-OFF) were repeated 100 times, respectively, then the resistance at 100th cycle was divided by the resistance at the 1st cycle and multiplied by 100 to evaluate the high-temperature resistance increase rate, respectively.

The resistance was measured using the same equipment and method as in Experimental Example (2).

(5) Measurement of high-temperature gas generation

The lithium secondary batteries of the above-described examples and comparative examples were placed in a chamber maintained at 60 °C, and the gas generation amount was measured while leaving them for 16 weeks, respectively.

Specifically, the lithium secondary battery was introduced into a jig designed to the size of the lithium secondary battery, and a pin was penetrated, the pressure change inside the jig was measured and converted it into an amount of gas generated.

Measurement and evaluation results are shown in Table 3.

The particle structures, molar ratios of nickel to the total number of moles of metals except for lithium, crystal grain sizes, and XRD peak intensity ratios of the lithium-transition metal oxide particles of the examples and comparative examples are shown in Table 2.

[TABLE 2]

|  | Particle structure | Nickel molar ratio | Crystal grain size (nm) | XRD peak intensity ratio (%) |
|---|---|---|---|---|
| Example 1 | Single particle | 0.94 | 407 | 10.22 |
| Example 2 | Single particle | 0.94 | 400 | 10.54 |
| Example 3 | Single particle | 0.94 | 440 | 10.81 |
| Example 4 | Single particle | 0.94 | 450 | 10.98 |
| Example 5 | Secondary particle | 0.94 | 406 | 10.13 |
| Example 6 | Single particle | 0.88 | 442 | 10.89 |
| Example 7 | Single particle | 0.94 | 395 | 10.11 |
| Comparative Example 1 | Single particle | 0.94 | 333 | 10.83 |
| Comparative Example 2 | Single particle | 0.94 | 340 | 9.80 |
| Comparative Example 3 | Single particle | 0.88 | 465 | 9.81 |
| Comparative Example 4 | Single particle | 0.94 | 460 | 10.12 |

[TABLE 3]

|  | Room temperature resistance (mΩ) | High-temperature capacity retention rate (%, 500th cycle, 45 °C) | High-temperature resistance increase rate (%) | High-temperature gas generation (mL, 60 °C) |
|---|---|---|---|---|
| Example 1 | 2.9 | 89 | 120 | 80 |
| Example 2 | 3.0 | 86 | 140 | 90 |
| Example 3 | 2.7 | 91 | 110 | 70 |
| Example 4 | 3.1 | 89 | 120 | 90 |
| Example 5 | 3.2 | 84 | 160 | 110 |
| Example 6 | 3.3 | 88 | 130 | 90 |
| Example 7 | 3.5 | 84 | 170 | 120 |
| Comparative Example 1 | 4.2 | 78 | 230 | 170 |
| Comparative Example 2 | 3.6 | 71 | 280 | 210 |
| Comparative Example 3 | 4.3 | 82 | 220 | 130 |
| Comparative Example 4 | 3.9 | 80 | 210 | 140 |

Referring to Tables 2 and 3, in the examples where the crystal grain size of the lithium-transition metal oxide particles was 350 nm to 450 nm and the XRD peak intensity ratio was 10% to 11%, the room-temperature resistance, high-temperature resistance increase rate, and high-temperature gas generation amount were decreased and the high-temperature capacity retention rate was improved compared to the comparative examples.

In Example 5, where the lithium-transition metal oxide particles having a secondary particle form were used as the cathode active material, the room-temperature resistance, high-temperature resistance increase rate, and gas generation amount were relatively increased and the capacity retention rate was decreased compared to the other examples.

In Example 6, where the molar ratio of nickel to the total number of moles of metals except for lithium in the lithium-transition metal oxide particles was less than 0.9, the room-temperature resistance was relatively increased and the output characteristics were decreased compared to the other examples.

[Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

Claims

1.    A cathode active material for a lithium secondary battery comprising:

lithium-transition metal oxide particles which have a crystal grain size of 350 nm to 450 nm measured by X-ray diffraction (XRD) analysis, and an XRD peak intensity ratio of 10% to 11% defined by Equation 1 below:

[Equation 1]

$$\text{XRD peak intensity ratio (\%)} = 100 \times I(110)/\{I(110) + I(003)\}$$

(in Equation 1, I(110) is a maximum height of a peak of a (110) plane of the lithium-transition metal oxide particles by the XRD analysis, and I(003) is a maximum height of a peak of a (003) plane by the XRD analysis).

2. The cathode active material for a lithium secondary battery according to claim 1, wherein the crystal grain size is measured through Equation 2 below:

[Equation 2]

$$L = \frac{0.9\lambda}{\beta cos\theta}$$

(in Equation 2, L is the crystal grain size(nm), $\lambda$ is an X-ray wavelength(nm), $\beta$ is a full width at half maximum of the peak of the (003) plane(rad), and $\theta$ is a diffraction angle(rad)).

3. The cathode active material for a lithium secondary battery according to claims 1 or 2, wherein the XRD peak intensity ratio is 10.2% to 10.8%.

4. The cathode active material for a lithium secondary battery according to any one of claims 1 to 3, wherein the crystal grain size is 400 nm to 450 nm.

5. The cathode active material for a lithium secondary battery according to any one of claims 1 to 4, wherein the crystal grain size is 407 nm to 440 nm.

6. The cathode active material for a lithium secondary battery according to any one of claims 1 to 5, wherein the lithium-transition metal oxide particles comprise nickel, and
a ratio of a total number of moles of nickel in the lithium-transition metal oxide particles to a total number of moles of metals except for lithium in the lithium-transition metal oxide particles is 0.9 or more.

7. The cathode active material for a lithium secondary battery according to claim 6, wherein the ratio of the total number of moles of nickel in the lithium-transition metal oxide particles to the total number of moles of metals except for lithium in the lithium-transition metal oxide particles is 0.94 or more.

8. The cathode active material for a lithium secondary battery according to any one of claims 1 to 7, wherein the lithium-transition metal oxide particles have a single particle form.

9. The cathode active material for a lithium secondary battery according to any one of claims 1 to 8, wherein the lithium-transition metal oxide particles comprise nickel, cobalt and manganese.

10. The cathode active material for a lithium secondary battery according to any one of claims 1 to 9, wherein the lithium-transition metal oxide particles comprise a coating element or a doping element, and
the coating element or the doping element comprises at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

11. A lithium secondary battery comprising:

a cathode which comprises the cathode active material for a lithium secondary battery according to any one of claims 1 to 10; and
an anode disposed to face the cathode.

[FIG. 1]

[FIG. 2]

| Europäisches Patentamt European Patent Office Office européen des brevets | **EUROPEAN SEARCH REPORT** | **Application Number** EP 25 15 8928 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/139290 A1 (POSCO [KR]; RES INST IND SCIENCE & TECH [KR]; POSCO CHEM CO LTD [KR]) 30 June 2022 (2022-06-30) * the whole document * -& EP 4 266 407 A1 (POSCO HOLDINGS INC [KR]; RES INST IND SCIENCE & TECH [KR] ET AL.) 25 October 2023 (2023-10-25) * paragraph [0109] - paragraph [0118]; tables 1,3 * | 1-11 | INV. C01G53/42 C01G53/506 H01M4/525 |
| X | WO 2023/236906 A1 (BEIJING EASPRING MAT TECH CO LTD [CN]) 14 December 2023 (2023-12-14) * the whole document * -& EP 4 345 947 A1 (BEIJING EASPRING MAT TECH CO LTD [CN]) 3 April 2024 (2024-04-03) * paragraphs [0141] - [0144]; table 1 * | 1-11 | |
| X | EP 4 131 485 A1 (SVOLT ENERGY TECH CO LTD [CN]) 8 February 2023 (2023-02-08) * paragraphs [0067], [0068]; example 1 * | 1-5,8-11 | |
| X | EP 4 203 100 A1 (LG ENERGY SOLUTION LTD [KR]) 28 June 2023 (2023-06-28) * paragraphs [0135], [0136] * | 1-5,8,9, 11 | TECHNICAL FIELDS SEARCHED (IPC) C01G H01M |
| A | EP 4 194 408 A2 (SK ON CO LTD [KR]) 14 June 2023 (2023-06-14) * paragraph [0043] - paragraph [0060] * | 1-11 | |

The present search report has been drawn up for all claims

| Place of search | Date of completion of the search | Examiner |
|---|---|---|
| Munich | 30 June 2025 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8928

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | Publication date | Patent family member(s) | | Publication date |
|---|---|---|---|---|---|
| WO 2022139290 | A1 | 30-06-2022 | CN | 116802842 A | 22-09-2023 |
| | | | EP | 4266407 A1 | 25-10-2023 |
| | | | JP | 2024500898 A | 10-01-2024 |
| | | | KR | 20220089183 A | 28-06-2022 |
| | | | US | 2024063385 A1 | 22-02-2024 |
| | | | WO | 2022139290 A1 | 30-06-2022 |
| EP 4266407 | A1 | 25-10-2023 | CN | 116802842 A | 22-09-2023 |
| | | | EP | 4266407 A1 | 25-10-2023 |
| | | | JP | 2024500898 A | 10-01-2024 |
| | | | KR | 20220089183 A | 28-06-2022 |
| | | | US | 2024063385 A1 | 22-02-2024 |
| | | | WO | 2022139290 A1 | 30-06-2022 |
| WO 2023236906 | A1 | 14-12-2023 | CN | 115084472 A | 20-09-2022 |
| | | | EP | 4345947 A1 | 03-04-2024 |
| | | | JP | 7640758 B2 | 05-03-2025 |
| | | | JP | 2024526436 A | 18-07-2024 |
| | | | KR | 20240011822 A | 26-01-2024 |
| | | | US | 11984586 B1 | 14-05-2024 |
| | | | WO | 2023236906 A1 | 14-12-2023 |
| EP 4345947 | A1 | 03-04-2024 | CN | 115084472 A | 20-09-2022 |
| | | | EP | 4345947 A1 | 03-04-2024 |
| | | | JP | 7640758 B2 | 05-03-2025 |
| | | | JP | 2024526436 A | 18-07-2024 |
| | | | KR | 20240011822 A | 26-01-2024 |
| | | | US | 11984586 B1 | 14-05-2024 |
| | | | WO | 2023236906 A1 | 14-12-2023 |
| EP 4131485 | A1 | 08-02-2023 | CN | 111430689 A | 17-07-2020 |
| | | | EP | 4131485 A1 | 08-02-2023 |
| | | | US | 2023009617 A1 | 12-01-2023 |
| | | | WO | 2021189997 A1 | 30-09-2021 |
| EP 4203100 | A1 | 28-06-2023 | CN | 116057733 A | 02-05-2023 |
| | | | EP | 4203100 A1 | 28-06-2023 |
| | | | JP | 7652891 B2 | 27-03-2025 |
| | | | JP | 2023542196 A | 05-10-2023 |
| | | | KR | 20220063757 A | 17-05-2022 |
| | | | US | 2023348294 A1 | 02-11-2023 |
| | | | WO | 2022103105 A1 | 19-05-2022 |
| EP 4194408 | A2 | 14-06-2023 | CN | 116247196 A | 09-06-2023 |
| | | | EP | 4194408 A2 | 14-06-2023 |
| | | | KR | 20230085513 A | 14-06-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 8928

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| | | US 2023178727 A1 | 08-06-2023 |

EPO FORM P0459

For more details about this annex : see Official Journal of the European Patent Office, No. 12/82

page 2 of 2